(19) **Europäisches Patentamt / European Patent Office / Office européen des brevets**

(11) **EP 3 573 476 B1**

(12) **EUROPEAN PATENT SPECIFICATION**

(45) Date of publication and mention
of the grant of the patent:
**10.03.2021 Bulletin 2021/10**

(21) Application number: **18704106.6**

(22) Date of filing: **12.01.2018**

(51) Int Cl.:
*A23L 3/01* (2006.01)     *A01M 17/00* (2006.01)
*A23B 9/04* (2006.01)     *A01M 1/22* (2006.01)

(86) International application number:
**PCT/US2018/013511**

(87) International publication number:
**WO 2018/140245 (02.08.2018 Gazette 2018/31)**

(54) **METHOD FOR DISINFESTING PSYLLIUM**

VERFAHREN ZUR BEHANDLUNG DES BEFALLS VON PSYLLIUM

PROCÉDÉ DE TRAITEMENT DE L'INFESTATION DE PSYLLIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2017 US 201715415097**

(43) Date of publication of application:
**04.12.2019 Bulletin 2019/49**

(73) Proprietor: **The Procter & Gamble Company
Cincinnati, OH 45202 (US)**

(72) Inventor: **KACZANOWSKI, Matthew, John
Cincinnati, Ohio 45202 (US)**

(74) Representative: **P&G Patent Germany
Procter & Gamble Service GmbH
Sulzbacher Straße 40
65824 Schwalbach am Taunus (DE)**

(56) References cited:
**WO-A1-2016/044948     CN-A- 103 416 383**

**Description**

FIELD OF THE INVENTION

The present invention is generally related to a method of disinfesting psyllium, and more particularly to a method of disinfesting psyllium using a high-frequency alternating electric field to dielectrically heat the psyllium without significantly altering the properties of the psyllium.

BACKGROUND OF THE INVENTION

Psyllium is a natural source of dietary fiber that has proven to have health benefits when consumed daily and following the recommended dose. Fiber can deliver the health benefits of lowering cholesterol, improving glycemic control, controlling weight and normalizing stool through its ability to form a gel in the gastrointestinal track. However, many adults do not consume enough fiber in their diets, and as a result, commonly use supplemental fiber products to meet the recommended daily dose.

Agricultural products, including supplemental fiber products such as psyllium products, must be free of pests to be useful in commerce. Chemical fumigation is a common method to control insects in food and other agricultural products. While effective for killing infestations, fumigation can often leave behind residual impurities in or on the agricultural material. Current United States (U.S.) regulations limit the maximum amount of residual impurities that can be present in or on agricultural products, such as psyllium.

A non-chemical method to rid agricultural products of pests can involve raising the temperature of the product for a sufficient amount of time to kill the infestation as disclosed e.g. in CN103416383B or WO2016/044948A1. However, elevated temperatures can be hard to achieve homogeneously throughout the mass of the agricultural product. As a result, long ramp-up, hold, and cooling times can be required to effectively kill pests. Long periods of elevated temperature exposure can affect the properties of the agricultural product. In the case of psyllium, extended exposure to elevated temperatures can damage the psyllium by reducing the swell volume, a measure of the ability of psyllium to absorb water and form a gel, which may reduce the health benefits of psyllium.

Thus, there is a need for an effective method of disinfesting psyllium, including psyllium husk, without leaving residual impurities or significantly altering the properties of psyllium.

SUMMARY OF THE INVENTION

A method of disinfesting psyllium comprising: introducing psyllium to a radiation chamber; and applying a high-frequency alternating electric field to the psyllium for a residence time of greater than about 1.5 minutes, wherein the residence time of 1.5 minutes to 6 minutes; dielectrically heating the psyllium to a target temperature of from 66°C to 77°C to form treated psyllium husk; wherein the high-frequency alternating electric field is configured at a frequency of about 13 MHz to about 1000 MHz; wherein the high-frequency alternating electric field is configured to a power of from about 600 kJ/kg to about 900 kJ/kg.

DETAILED DESCRIPTION OF THE INVENTION

Existing methods to control pests in food and other agricultural products include the use of pesticides and chemical fumigants. However the export of agricultural products from developing countries to the U.S. requires compliance with the U.S. maximum residue limits for chemicals and pesticides.

An alternative, non-chemical method of controlling pests uses dielectric heating with radio frequency and/or microwave frequency radiation to generate heat within a material. The radio frequency band of the electromagnetic spectrum covers electromagnetic waves having frequencies in the range of about 3 kilohertz (kHz) to about 300 gigahertz (GHz). Microwaves cover electromagnetic waves having frequencies in the range of about 300 megahertz (MHz) to about 300 GHz.

During dielectric heating, the material to be heated can form a dielectric between two parallel plate electrodes, which are alternatively charged by a high-frequency electric field. Dipoles within the material, such as water or ions, try to orient themselves with the oscillating electric field. The electric field alternation results in the ions continuously aligning back and forth within the field, generating heat at the molecular level within the material. This heat eventually raises the temperature of the entire mass of material through conduction from the inside of the material.

An attractive feature of using dielectric heating for pest control is the possible differential heating of pests in agricultural products. If the pests heat faster than the commodities they infest, the pests will reach a lethal temperature while the commodities would be heated to a lower temperature that does not cause damage or quality loss. However, it was surprisingly found that, in the case of psyllium pest infestations, the pests could not be selectively heated. It was found that psyllium can heat faster than the pests and can transfer heat to the pests buried in the material, causing pest mortality. However, if the psyllium is heated for too long or to a temperature that is too high, the psyllium can be irreversibly damaged.

The present invention relates to a method of disinfesting psyllium using dielectric heating to effectively raise the temperature of the psyllium to a specific target temperature range that can disinfest psyllium without significantly damaging or altering the properties of psyllium. Careful balancing of process conditions, such as psyllium temperature, power, air gap, residence time and belt speed, can be used to control the radiation energy in order to disinfest the psyllium without substantially reducing the psyllium swell volume.

The relationship between the process conditions was found to be as follows:

$$\text{Psyllium Temperature} = (18.93 \text{ x power}) - (4.12 \text{ x belt speed}) - (25.29 \text{ x air gap}) + 75.09$$

Where psyllium temperature is in degrees Fahrenheit (°F), power is in kilovolts (kV), belt speed is in inches/minute, and air gap is in inches.

As used herein, the articles "a" and "an" are understood to mean one or more of the material that is claimed or described.

As used herein, "air gap" refers to the space formed between the top of the psyllium bed and the electrode. The air gap is measured by taking the difference in the electrode gap and the height of the psyllium bed at the deepest point. The psyllium bed depth and air gap should be uniform in order to ensure consistent heating of the psyllium.

As used herein, "dielectric heating" refers to the process in which a high-frequency alternating electric field, including radio frequency or microwave frequency radiation, heats a dielectric material.

As used herein, "disinfesting" refers to inhibiting the presence of pests by killing them.

As used herein, "electrode gap" refers to the distance between the transmitting electrode and the receiving electrode.

As used herein, "microwave frequency radiation" refers to electromagnetic radiation in the frequency range from approximately 300 MHz to 300 GHz.

As used herein, "pests" refers to egg, larva, or adult forms of insects, such as psocids, khapra beetles and Indian meal moths, arachnids, and mites.

As used herein, "psyllium" refers to ground psyllium or ispaghula husk. Psyllium is from the seeds of *Plantago ovata* or *Plantago psyllium.* In one example, the psyllium husk is from *Plantago ovata.* It is believed that the husk contains the highest concentration of the fiber and the ground husk is used for a source of psyllium fiber.

As used herein, "radio frequency radiation" refers to electromagnetic radiation in the frequency range from approximately 3 kHz to 300 GHz.

As used herein "residence time" refers to the time that the psyllium is exposed to the high-frequency alternating electric field. In a continuous system, residence time can be controlled by belt speed and the electrode length, which is comparable to overall heating time in a batch system.

As used herein, "swell volume" refers to the volume of gel mass formed when 0.5 g psyllium husk is mixed with water to a total volume of 100 mL. Swell volume provides a measure of the ability of the psyllium to absorb water.

All weights, measurements and concentrations herein are measured at 23 degrees Celsius (°C) and 50% relative humidity, unless otherwise specified.

Disinfesting psyllium by dielectric heating can comprise placing psyllium in a radiation chamber and exposing the psyllium to a high-frequency alternating electric field to heat the psyllium and any pests that may be present. The high-frequency alternating electric field can be configured to comprise radio frequencies ranging from about 3 kHz to about 300 MHz and microwave frequencies ranging from about 301 MHz to about 300 GHz.

It was found that dielectric heating at both radio and microwave frequencies can sufficiently heat psyllium to kill pests that may be present without causing a decrease in the psyllium swell volume. One advantage to using dielectric heating is that it can volumetrically heat a material from the interaction with the water and ions contained within. Dielectric heating typically results in less heat energy loss and a more rapid heating time as the entire volume of material heats from the inside out compared to conduction or convection into the mass.

One advantage to using radio frequencies, as compared to microwave frequencies, is that it can provide uniform heating throughout a deeper bed of the material due to its longer wavelength and penetration depth. Radio frequencies may also be more economical because it can run at a lower cost per watt. Microwave frequencies have a smaller penetration depth and may result in uneven heating or may require the use of higher temperatures or longer exposure time for heat to transfer in order to kill pests throughout the material, which could damage the psyllium.

The high-frequency alternating electric field can be configured at a frequency of from about 13 MHz to about 1,000 MHz. The frequency can be from about 13 MHz to about 45 MHz, alternatively from about 20 MHz to about 30 MHz alternatively about 900 MHz to about 1,000 MHz, alternatively about 915 MHz, alternatively about 40 MHz, alternatively about 27.12 MHz, alternatively about 18 MHz, alternatively about 13.56 MHz. A frequency of about 13.56 MHz can be preferable.

The high-frequency alternating electric field can be configured at a wavelength of from about 0.1 m to about 300 m, alternatively from about 0.25 m to about 100 m, alternatively from about 0.3 m to about 50 m, alternatively from about 1 m to about 25 m. The wavelength can be about 0.33 m, alternatively about 16.67 m, alternatively about 22.11 m.

The high-frequency alternating electric field can be configured to a power of from about 600 kJ/kg to about 900 kJ/kg. The high-frequency alternating electric field can be configured at a power of about 624 kJ/kg to heat the psyllium to the target temperature in a residence time of about 3 minutes.

Psyllium can be heated to a target temperature of about 66°C to about 77°C, alternatively from about 66°C to about 71°C.

If psyllium is heated to a target temperature of about 50°C or less, the pests may not be killed. If psyllium is heated to a target temperature of about 78°C or more, the average swell volume of the psyllium may decrease. However, under some conditions, psyllium may be heated to a target temperature of greater than about 78°C without a decrease in swell volume. It was observed that at a target temperature of greater than about 82°C, the psyllium can begin to turn brown due to the caramelization of sugars within the psyllium and can become rancid due to oxidation of lipids. It was also observed that at temperatures of greater than about 93°C, psyllium cells can begin to rupture even though the swell volume may not be decreased.

Psyllium is a natural product and variability can exist in properties such as the water content, protein content, fiber concentration, and cell wall strength, which may explain the differences in swell volume and the ability to withstand heating across samples.

A most preferred target temperature range to heat the psyllium can be from about 66°C to about 77°C. It is believed that this temperature range is high enough to kill pests in the psyllium, without significantly altering the swell volume of the psyllium.

The psyllium can reach the target temperature during the residence time and can remain at the target temperature for a period of time after the psyllium exits the high-frequency alternating electric field. The psyllium can remain at the target temperature for about 1.5 minute to about 6 minutes, alternatively about 1.5 minutes to about 4.5 minutes, alternatively about 2 minutes to about 4 minutes. If the psyllium remains at the target temperature for less than about 1.5 minute, the pests may not be killed.

The induced temperature increase of the psyllium from dielectric heating can be from about 30°C to about 60°C, alternatively from about 35°C to about 55°C, alternatively from about 40°C to about 50°C.

Psyllium treated with dielectric heating can have an average swell volume of from about 17 mL to about 45 mL, alternatively from about 20 mL to about 35 mL, alternatively from about 25 mL to about 30 mL. The swell volume of psyllium treated with dielectric heating can be within about 1 to about 2 mL of the swell volume of untreated psyllium. The swell volume of the treated psyllium can be within about 95% of the swell volume of untreated psyllium, alternatively within about 90%, alternatively within about 80%, alternatively within about 75%. Psyllium treated with dielectric heating can have an average swell volume of greater than about 17 ml, alternatively greater than about 20 mL, alternatively greater than about 24 mL, alternatively greater than about 26 mL, alternatively greater than about 28 mL. The swell volume of the treated psyllium can be substantially the same as untreated psyllium. Swell volume can be determined according to the Swell Volume Method described hereafter.

The radiation chamber can be loaded with any amount of psyllium so long as there is enough material in the chamber to absorb the energy. However, if there is too much psyllium loaded in the radiation chamber, the system may need to be run at a higher power level in order to heat the mass of psyllium that is not economical. The radiation chamber can be loaded so that it contains from about 10% to about 80% psyllium between the electrodes, alternatively about 20% to about 75%, alternatively about 30% to about 65%, alternatively about 35% to about 55%.

The radiation chamber can be a closed container or configured to allow a conveyor belt carrying psyllium to move through the chamber. The radiation chamber can have at least one set of parallel plate electrodes comprising a transmitting electrode positioned above the psyllium and a receiving electrode positioned below the psyllium. Alternatively, the radiation chamber can comprise two adjacent sets of parallel plate electrodes positioned end-to-end. The radiation chamber can comprise a transmitting electrode positioned above a conveyor belt and a receiving electrode positioned below the conveyor belt. The electrodes can have a length of about 1 m to about 5 m, alternatively about 1.5 m to about 4 m, alternatively about 2 m to about 3 m. The radiation chamber can comprise two sets of parallel plate electrodes having a length of about 2.4 m positioned end-to-end.

The transmitting and receiving electrodes can be positioned to create an electrode gap. The electrode gap can be any size so long as there is an air gap created between the psyllium bed and the transmitting electrode. The electrode gap can be from about 3 inches (7.62 cm) to about 18 inches (45.72 cm), alternatively from about 4.5 inches (11.43 cm) to about 12 inches (30.48 cm), and alternatively from about 5 inches (12.7 cm) to about 9 inches (22.86 cm). The electrode gap can be from about 8 inches (20.32 cm) to about 9 inches (22.86 cm). The electrode gap can be measured as the distance from the facing surface of the transmitting electrode to the facing surface of the receiving electrode.

The air gap can be from about 1 inch (2.54 cm) to about 8 inches (20.32 cm), alternatively about 1.5 inches (3.81 cm) to about 5.5 inches (13.97 cm), alternatively about 2 inches (5.08 cm) to about 4 inches (10.16 cm), alternatively about 2.5 inches (6.35 cm) to about 3 inches (7.62 cm). The air gap can be about 2.5 inches (6.35 cm) to about 5.5 inches (13.97 cm), alternatively about 3 inches (7.62 cm) to about 5.25 inches (13.34 cm), alternatively 3.5 inches (8.89 cm) to about 4.75 inches (12.06 cm), alternatively about 3.75 inches (9.52 cm) to about 4.25 inches (10.79 cm). The air gap can be measured as the distance from the facing surface of the transmitting electrode to the highest point of the psyllium bed.

It is believed that the air gap and the psyllium can both act as resistors. As the air gap gets larger, the amount of power lost across the air gap can increase. If the air gap is greater than about 8 inches (20.32 cm), too much power may be lost in the air gap and may not go into the psyllium. If the air gap is less than about 1 inch (2.54 cm), safety issues can occur such as an avalanche breakdown and/or moisture may buildup in the system because the air flow between the psyllium and the electrode may be restricted.

Alternatively, the radiation chamber may not have parallel plate electrodes and has a magnetron that generates microwaves.

Alternatively, the radiation chamber can comprise non-parallel plate electrodes, such as coaxial electrodes, curved electrodes, rod electrodes, and combinations thereof.

The psyllium bed in the radiation chamber can be any depth so long as there is an air gap between the transmitting electrode and the psyllium. The psyllium bed can have a uniform depth to allow for consistent heating of the psyllium.

The depth of the psyllium bed can be from about 3 cm to about 150 cm, alternatively about 5 cm to about 100 cm, alternatively about 10 cm to about 80 cm, alternatively about 15 cm to about 50 cm. The depth of psyllium bed can be any depth so long as it does not exceed the penetration depth of the electromagnetic radiation. The penetration depth of the electromagnetic radiation in psyllium can be calculated as follows:

$$d_p = \frac{29979458}{2\pi f \sqrt{2 \times 1.6822 \left[ \sqrt{1 + \left( \frac{0.0526}{1.6822} \right)^2} - 1 \right]}}$$

The psyllium bed can comprise a rounded edge cross-section. Alternatively, the psyllium bed can comprise no edges such as in a cylinder shape.

It has been found that when a psyllium bed having a rectangular cross-section shape is exposed to radio frequency and/or microwave frequency radiation, it can result in excess heating at the edges of the psyllium bed. Without being bound by theory, it is believed that this may be caused by bending of the electromagnetic field and greater heating due to the lower resistance of psyllium compared to air. The high temperatures at the edges of the material can result in lowered swell volume. It has been found that when a psyllium bed having a rounded edge cross-section was exposed to radio frequency and/or microwave frequency radiation, it may not result in excess heating at the edges of the psyllium bed. A psyllium bed with a rounded edge cross-section can be formed when psyllium is dropped from a hopper onto a conveyor belt or by pouring psyllium into a mold or container with rounded edges.

The electrode voltage can be from about 6 kV to about 25 kV, alternatively about 8 kV to about 20 kV, alternatively about 10 kV to about 15 kV.

The method for disinfesting psyllium with dielectric heating can be performed as follows:

First, the psyllium husk can be separated from the psyllium seed. The psyllium seed can be discarded and only the psyllium husk is dielectrically heated. If psyllium is dielectrically heated before the seed and husk are separated, pests could re-infest the husk during processing and a second heating treatment may be needed.

The psyllium husk can comprise small amounts of psyllium seed. The psyllium husk can comprise at least about 90% husk, alternatively at least about 93% husk, alternatively at least about 95% husk, alternatively at least about 97% husk, alternatively at least about 99% husk.

Whole psyllium husk and/or ground psyllium husk can then be exposed to a high-frequency alternating electric field.

Whole psyllium husk can include particle sizes distributed as follows: about 84% of the particles are less than about 1000 μm and greater than about 250 μm. Alternatively, psyllium husk can be ground to a point where particle sizes are distributed as follows: about 49.2% of the particles are equal or less than about 710 μm and greater than about 250 μm. Alternatively, psyllium husk can be ground to a point where particle sizes are distributed as follows: about 100% of the particles are less than about 250 μm, about 92% of the particles are less than about 212 μm, about 83% are less than about 180 μm, about 61% are less than about 150 μm, about 30% are less than about 105 μm, and about 11% are less than about 74 μm. Alternatively, psyllium husk can be ground to a point where particle sizes are distributed as follows: about 100% of the particles are less than about 180 μm, about 98.4% are less than about 150 μm, about 61.3% are less than about 105 μm, and about 35.1% are less than about 74 μm. Particle sizes and particle size distributions can be measured according to the Particle Size Method described hereafter.

The psyllium husk can be exposed to the high-frequency alternating electric field in batches or in a continuous process. In a batch process, the psyllium husk can be directly placed in a radiation chamber. Alternatively, the psyllium husk can be packaged in bags or containers and placed in a radiation chamber. The psyllium husk can be packaged in any bag or container that has a low loss factor, for instance a loss factor of about 0.001 or less, alternatively about 0.05 or less, or is made of microwave safe materials. Suitable material for the bags can include natural fibers including jute, natural fiber, cloth, canvas, cotton, and/or polypropylene, and combinations thereof. The psyllium husk can be packaged in a super sack, which is a 950 kg weave bag, and an electrode can be placed in the super sack in order to allow a high-frequency alternating electric field configured at a microwave frequency to penetrate the volume of material. In a continuous process, the psyllium husk can be discharged from a hopper onto a conveyor belt, which can then move through the radiation chamber between the electrodes.

In a continuous process, the belt speed can be from about 5 inches (12.7 cm) to about 60 inches (152.4 cm) per minute, alternatively from about 8 inches (20.32 cm) to about 30 inches (76.2 cm) per minute, and alternatively from about 10 inches (25.4 cm) to about 24 inches (60.96 cm) per minute.

The psyllium husk can be dielectrically heated at a throughput of about 50 kg/hour to about 2500 kg/hour, alternatively about 100 kg/hour to about 2000 kg/hour, alternatively about 250 kg/hour to about 1500 kg/hour, alternatively about 500 kg/hour to about 1000 kg/hour. The psyllium husk can be dielectrically heated at a throughput of about 100 kg/hour to about 250 kg/hour. Throughput can be measured by mass calculations of the psyllium husk that enters the radiation chamber versus the psyllium husk that exits the radiation chamber. Throughput in a continuous process can depend on the belt speed and the amount of psyllium husk that enters the radiation chamber.

The residence time of the psyllium husk in the high-frequency alternating electric field can be from about 1.5 minutes to about 6 minutes, alternatively about 2.5 minutes to about 5 minutes. The residence time of the psyllium husk in the high-frequency alternating electric field can be greater than about 1.5 minutes. The residence time can be accomplished by changing the belt speed or the electrode length. If the residence time is too short, the psyllium husk may not reach the target temperature and all of the pests, including larvae and eggs, may not be destroyed. However, if the residence time is too long, the psyllium husk can reach a temperature that can cause the swell volume of the psyllium husk to decrease, cells to burst, and/or the color to turn brown.

Optionally, a continuous air flow source can be placed in the radiation chamber to introduce air at a temperature of about 60°C (140°F) to about 82.2°C (180°F), alternatively about 71.1°C (160°F) to about 76.7°C (170°F) into the radiation chamber. A continuous air flow source can be placed in the radiation chamber to introduce air at a temperature of about 71.1°C (160°F). Introducing a continuous air flow through the radiation chamber can help keep the psyllium husk at the target temperature. Continuous air flow through the radiation chamber can also help get moisture out of the system. It is believed that psyllium husk can give off water during heating. If water accumulates in the radiation chamber or in the bags of psyllium husk, it can cause the psyllium to gel. Optionally, the radiation chamber can include a vacuum to remove any water accumulation within the radiation chamber or bags of psyllium husk.

After dielectric heating treatment is complete, the treated psyllium husk can be cooled to a temperature of about 20°C to about 48°C, alternatively about 25°C to about 45°C, alternatively about 30°C to about 40°C. One advantage to cooling the treated psyllium husk is that it can minimize the risk of damaging the psyllium from prolonged hot storage and can help make the material safe for human handling and warehouse storage.

The psyllium husk can be treated with other means of pest control and/or sanitization before or after dielectric heating. For instance, after dielectric heating, the psyllium husk can be steam sanitized to kill bacteria, yeast, and/or mold that were not killed during dielectric heating. It is believed that dielectric heating may not get the psyllium husk to a high enough temperature for a long enough time to sufficiently kill bacteria, yeast, and/or mold without damaging the psyllium husk.

The treated psyllium husk can be placed in bags, such as jute bags or super sacks, silos, or any other suitable container for storage. The treated psyllium husk can be stored at a temperature of about 30°C (86°F) or less and about 60% relative humidity. One advantage to storing the treated psyllium husk under these conditions is that it can help to maintain psyllium husk quality. Alternatively, the treated psyllium husk can be stored at a temperature of about 65°F (18°C) or less and about 60% relative humidity. One advantage to storing the treated psyllium husk under these conditions is that it can reduce the re-infestation of pests, as pests are typically not as mobile in cooler temperatures, and/or kill some pests.

During storage, the pest population can be monitored regularly. Any suitable manner, including visual inspection or the USP Psyllium Husk Monograph, can be used to make sure that the psyllium is substantially free of pests. Visual inspection can include monitoring the pest population daily by monitoring the outside of the jute bags or the exterior of the super sacks for signs of pests or visual inspection can include taking 200 g to 500 g of whole psyllium husk or ground psyllium husk from the bags and checking to see if there are pests.

Substantially free of pests can mean that there is not a pest infestation. A pest infestation can be defined as not more than 400 pest fragments per 25 g of ground psyllium husk or not more than 100 pest fragments per 25 g of whole psyllium husk. If there is a pest infestation, the psyllium cannot be used and may be discarded.

The treated psyllium husk can also be substantially free of the khapra beetle, which means that no living khapra beetle adults, larva, or eggs are found by using visual inspection. Psyllium that contains evidence of living khapra beetles cannot be shipped into the U.S. and are discarded.

The treated psyllium husk can be substantially free of inorganic bromide residue. As used herein, substantially free of inorganic bromide residue means that the psyllium husk comprises less than about 125 ppm inorganic bromide residue, alternatively less than about 50 ppm inorganic bromide residue, alternatively less than about 35 ppm inorganic bromide residue, alternatively less than about 15 ppm inorganic bromide residue. Inorganic bromide residue can be measured using the method described in Bromine Containing Fumigants Determined as Total Inorganic Bromide published by the Community Reference Laboratory for Single Residue Methods, CVUA Stuttgart, Schaflandstr. 3/2, 70736 Fellbach, Germany (November 11, 2008).

Treated psyllium husk can be mixed with additional ingredients to form a finished psyllium product. Finished psyllium products can include, but are not limited to, supplements, beverages, snack bars, cookies, baked goods, soft chews, candies, and combinations thereof.

Non-limiting examples of additional ingredients can include sweeteners; grains and seeds including oats, barley, wheat, wheat bran, rye, rice, chia, buckwheat, quinoa, amaranth, flax, faro, spelt, emmer, einkorn, kamut, millet, maize, tricale, teff, and combinations thereof; dried fruits; chocolate; binding agents including gelatin, pectin, starch, and combinations thereof; processing aids including animal fats, fatty acids, saturated fats, hydrogenated plant oils; humectant components including polyhydric alcohols, polyethylene glycol, propylene glycol, polyglycerol, xanthan gums, carageenans, and combinations thereof; carbohydrate components including polydextrose, trehalose, lactose, maltose, glucose, galactose, maltodextrin, and combinations thereof; food grade acids including citric acid, malic acid, lactic acid, adipic acid, fumaric acid and combinations thereof; and combinations thereof.

Sweeteners can include sugars, sugar substitutes, and combinations thereof. Non-limiting examples of sugars can include glucose, sucrose, fructose, corn syrup, high fructose corn syrup, agave nectar, honey, maple sugar, molasses, invert sugar, and combinations thereof. Non-limiting examples of sugar substitutes can include dextrose, stevia, aspartame, sucralose, neotame, acesulfame, potassium, sodium saccharin, sugar alcohols including xylitol, sorbitol, mannitol, maltitol, lactitol, isomalt, erythritol, and glycerin, and combinations thereof.

Radio Frequency Disinfestation Test

The effectiveness of dielectric heating using radio frequency for disinfestation of psyllium husk was tested. A pest infestation of cigarette beetle adults, larvae, and eggs and Indian meal moth larvae and eggs were buried in a sample of psyllium husk and treated with 27.12 MHz radio frequency radiation. A control sample of psyllium husk without an added pest infestation was left untreated and was stored in a sealed container at about 23°C and about 50% relative humidity.

The viability of the added pest infestation was assessed at weekly intervals for 2 months by visual inspection.

The test was performed according to the Radio Frequency Disinfestation Test Method described hereafter.

Table 1 summarizes the results from this test. The swell volume for each sample and control was tested and average values reported.

Table 1

| Example | Residence Time (sec) | Temperature Range of Psyllium (°C) | Average Psyllium Swell Volume (mL) | Swell Volume Sample Size (n) | Infestation Kill at 2 Months |
|---------|---------------------|-----------------------------------|-----------------------------------|------------------------------|------------------------------|
| 1 | Control | N/A | 28 | 2 | N/A |
| 2 | Control | N/A | 28 | 2 | N/A |
| 3 | 90 | 79.4-95 | 27 | 1 | Complete |
| 4 | 90 | 79.4-95 | 26 | 1 | Complete |
| 5 | 95 | 71.1-78.3 | 26 | 1 | Complete |
| 6 | 95 | 71.1-78.3 | 26 | 2 | Complete |
| 7 | 125 | 90.6-92.2 | 26 | 1 | Complete |
| 8 | 125 | 90.6-92.2 | 26 | 2 | Complete |

(continued)

| Example | Residence Time (sec) | Temperature Range of Psyllium (°C) | Average Psyllium Swell Volume (mL) | Swell Volume Sample Size (n) | Infestation Kill at 2 Months |
|---|---|---|---|---|---|
| 9 | 128 | 58.3-97.8 | 26 | 1 | Complete |
| 10 | 128 | 58.3-97.8 | 25 | 2 | Complete |
| 11 | 138 | 80.6-98.3 | 26 | 1 | Complete |
| 12 | 138 | 80.6-98.3 | 26 | 2 | Complete |
| 13 | 160 | 70-91.7 | 26 | 1 | Complete |
| 14 | 160 | 70-91.7 | 26 | 1 | Complete |

It was found that a complete kill of the infestation was possible with dielectric heating treatment using radio frequency for all time points and temperatures tested. However, it was found that dielectric heating using radio frequency reduced the swell volume of the psyllium husk as compared to control under all the conditions tested.

Microwave Frequency Disinfestation Test

The effectiveness of dielectric heating using a microwave frequency for disinfestation of psyllium husk was tested. A pest infestation of cigarette beetle adults, larvae and eggs and Indian meal moth larvae and eggs were buried in a sample of psyllium husk and treated with 915 MHz microwave frequency radiation. A control sample of psyllium husk without an added pest infestation was left untreated and was stored in a sealed container at about 23°C and about 50% relative humidity.

The viability of the added pest infestation was assessed at weekly intervals for 2 months by visual inspection.

The test was performed according to the Microwave Disinfestation Test Method described hereafter.

Table 2 summarizes the results from this test. The swell volume for each sample and control was tested and average values reported.

Table 2

| Example | Residence Time (sec) | Power (kV) | Temperature Range of Psyllium (°C) | Average Psyllium Swell Volume (mL) | Swell Volume Sample Size (n) | Infestation Kill at 2 Months |
|---|---|---|---|---|---|---|
| 1 | 0 (Control) | N/A | N/A | 30 | 2 | N/A |
| 2 | 0 (Control) | N/A | N/A | 27 | 2 | N/A |
| 3 | 0 (Control) | N/A | N/A | 29 | 2 | N/A |
| 4 | 90 | 7 | 48.9-82.2 | 30 | 1 | Incomplete |
| 5 | 120 | 7 | 61.7-98.9 | 28 | 1 | Complete |
| 6 | 180 | 7 | 85-110 | 26 | 2 | Complete |
| 7 | 90 | 9 | 48.9-50.5 | 28 | 1 | Incomplete |
| 8 | 157 | 9 | 69.4-92.8 | 28 | 1 | Complete |
| 9 | 240 | 9 | 81.7-110 | 27 | 2 | Complete |

It was found that after dielectric heating treatment using a microwave frequency, psyllium husk swell volume can be maintained with complete kill of the pest infestation under certain temperature conditions. When psyllium husk was heated to a temperature range of 48.9-82.2°C (Example 4) and 48.9 -50.5°C (Example 7), the swell volume of the psyllium husk was similar to that of the controls, however, it resulted in an incomplete kill of the pest infestation. When psyllium husk was heated to a temperature range of 61.7-98.9°C (Example 5), 69.4-92.8°C (Example 8), and 81.7-110°C (Example 9), the swell volume was maintained and complete kill of the pest infestation was achieved. When psyllium husk was heated to temperature ranges of 85-110°C (Example 6), complete kill of the pest infestation was achieved, however, swell volume decreased as compared to control. It may be advisable to adjust the conditions such that the temperature range does not reach 110°C in order to maintain the swell volume in most samples.

It is believed that the variability in the average swell volume of the controls may be due to the variability in the natural properties of psyllium.

Continuous Dielectric Heating Disinfestation Test

The effectiveness of dielectric heating for disinfestation of psyllium husk in a continuous process was tested using a radio frequency. A pest infestation of cigarette beetle adults and larvae and Indian meal moth larvae and eggs were buried in a sample of psyllium husk on a conveyor belt or placed in containers next to the psyllium husk and treated with radio frequency radiation by moving the sample through a radiation chamber. The pest infestation in the side containers and the pest infestation in the psyllium husk were removed after exiting the radiation chamber and placed in individual jars for inspection. A control sample of psyllium husk without an added pest infestation was left untreated and was stored in a sealed container at about 23°C and about 50% relative humidity.

The viability of the added pest infestation was assessed at bi-weekly intervals for 2 months by visual inspection.

The test was performed according to the Continuous Dielectric Heating Disinfestation Test Method described hereafter.

Table 3 summarizes the results from this test. The swell volume for each sample and control was tested and the values were reported.

Table 3

| Example | Plate Height (in) | Belt Speed (in/min) | Psyllium Husk Depth (in) | Temperature Range of Psyllium (°C) | Psyllium Swell Volume (mL) | Infestation Kill at 2 months |
|---|---|---|---|---|---|---|
| 1 | Control | N/A | N/A | N/A | 25 | N/A |
| 2 | Control | N/A | N/A | N/A | 25 | N/A |
| 3 | Control | N/A | N/A | N/A | 25 | N/A |
| 4 | 5.625 | 12 | 1.5 | 61.1-76.7 | 25 | Complete |
| 5 | 5.625 | 8 | 1.5 | 71.1-87.2 | 25 | Complete |
| 6 | 5.625 | 20 | 3 | 76.7-79.4 | 25 | Complete |
| 7 | 6 | 12 | 3 | 77.2-90.6 | 25 | Complete |
| 8 | 7 | 12 | 1.5 | 56.1-62.2 | 25 | Complete |
| 9 | 7 | 8 | 1.5 | 62.8-72.8 | 25 | Complete |
| 10 | 7 | 12 | 3 | 60-77.8 | 26 | Complete |
| 11 | 7.125 | 12 | 3 | 72.8-88.9 | 25 | Complete |
| 12 | 8.5 | 12 | 3 | 53.3-60 | 25 | Complete |

Total pest infestation kill and maintenance of swell volume could be achieved in a continuous dielectric heating process using radio frequency radiation at various throughput levels. It was found that the pest infestation placed in the psyllium husk were killed under all conditions tested. It is believed that the increase in swell volume in Example 10 was due to a measurement outlier and not an increase in swell volume due to treatment. However, when the pest infestation was placed in a container next to the psyllium husk on the conveyor belt, they were not killed under the same conditions. It is believed that the psyllium husk may heat faster than the pests and that heat transfer from the psyllium husk to the pests may be needed for disinfestation.

Radio Frequency Disinfestation Test Method

Disinfestation of psyllium in a batch process is conducted using a radio frequency oven operating at 27.12 MHz. An example of a suitable radio frequency oven is a Sairem Labotron™ 12RF50 radio frequency oven (available from Sairem, Neyron, France). A 15 inch (38.1 cm) by 10 inch (25.4 cm) by 3 inch (7.62 cm) glass tray is filled with psyllium husk to a depth of about 1 inch (2.54 cm). A pest infestation is created by adding about 1 tablespoon of cigarette beetle adults, larvae and eggs and about 1 teaspoon of Indian meal moth larvae and eggs to the psyllium husk in each of the four corners and the center of the tray. The tray is placed into the oven and fiber optic temperature sensors are placed halfway into the bed of psyllium husk in the center and right back corner of the glass tray.

The samples are radiated with a radio frequency field for times ranging from 90 to 160 seconds. The temperature indicated from the center and the edge of the psyllium husk is recorded.

The radiation is stopped and the tray is removed from the oven. The pest infestation is scooped from each of the four corners and the center of the tray and each individual scoop is placed into Ziplock® bags. The bags are sealed and stored at about 23°C and about 50% relative humidity.

The viability of the pest infestation (adults, larvae and eggs) is assessed at weekly intervals for 2 months by visual inspection. Visual inspection is performed by monitoring the outside of the Ziplock® bags for signs of pests and the presence of pest movement.

Microwave Disinfestation Test Method

Disinfestation of psyllium in a batch process is conducted using a microwave oven operating at 915 MHz. An example of a suitable microwave oven is a Sairem AMW 200 microwave oven (available from Sairem, Neyron, France). White polyethylene plastic buckets with plastic handles and lids are filled with about 2 pounds of psyllium husk. A pest infestation is created by adding Indian meal moth larvae and eggs and cigarette beetle adults and larvae to the top center of the psyllium husk. The pest infestation is covered with about 1 cm of psyllium husk. Two digi-sensi temperature indicating labels are placed in the psyllium husk. An example of a suitable temperature indicating label is a digi-sensi irreversible 8 point horizontal temperature label (Catalog #08068-22) available from Cole-Parmer® Instrument Co., Vernon Hills, IL. One indicating label is placed just below the surface at the edge of the psyllium husk and the other is placed in the center of the psyllium husk. The lid is placed on the bucket.

To provide adequate dielectric load, water is added to a separate tray and is placed in the chamber with the psyllium containing buckets. The samples are radiated with 7 kV or 9 kV of power for times ranging from 90 to 240 seconds. The temperature indicated from the center and edge of the psyllium husk is recorded.

The microwave radiation is stopped and the buckets are removed from the oven. The pest infestation is scooped from the center of each bucket and is placed into individual Ziplock® bags. The bags are sealed and stored at about 23°C and 50% relative humidity.

The viability of the pest infestation (adults, larvae and eggs) is assessed at weekly intervals for 2 months by visual inspection. Visual inspection is performed by monitoring the outside of the Ziplock® bags for signs of pests and the presence of pest movement.

Continuous Dielectric Heating Disinfestation Test Method

Disinfestation of psyllium in a continuous process is conducted using a dielectric heating system comprising a central radiation cabinet having parallel radio frequency electrodes operating at 18 MHz and a Teflon belt to carry the psyllium through the cabinet. Psyllium husk is laid onto a moving Teflon belt from a hopper with a side gate discharge to create a psyllium bed. The discharge gate is adjusted to give a bed of psyllium with sloping sides having a center height of 1.5 or 3 inches (3.81 or 7.62 cm). The belt is moved through the central radiation chamber at speeds of 8, 12 or 20 inches (20.32, 30.48 or 50.8 cm) per minute. A pest infestation is created by burying Indian meal moth larvae and eggs and cigarette beetle adults and larvae in the psyllium husk. In addition, a pest infestation of Indian meal moth larvae and eggs and cigarette beetle adults and larvae are placed into containers and set on the moving belt alongside, but not in contact with, the psyllium husk.

In the radiation chamber, the electrode gap is adjusted from 5.625 inches (14.2875 cm) to 8.5 inches (21.59 cm). The air gap is calculated as the electrode gap minus the psyllium husk bed depth. The applied power was set at 13 kV on the electrode plate.

The pest infestation is scooped out of the psyllium husk after exiting the radiation chamber and is placed into individual jars for inspection. The containers are removed from the belt after exiting the radiation chamber and the pest infestation is placed into individual jars for inspection. The jars are sealed and stored at about 23°C and about 50% relative humidity.

The viability of the pest infestation (adults, larvae and eggs) is assessed at biweekly intervals for 2 months by visual inspection. Visual inspection is performed by monitoring the outside of the jars for signs of pests and the presence of pest movement.

Swell Volume Method

0.5g of psyllium husk is weighed and transferred to a 100 mL graduated mixing cylinder. Purified water is added to a total volume of 100 mL. The graduated cylinder is capped and inverted ten times to obtain a uniform suspension and is allowed to stand at room temperature (23°C). At four and eight hours from the start of the test, the cylinder is inverted ten times again. After the eight hour inversions, the cylinder is allowed to stand at room temperature (23°C) for 16 hours. The volume of the swollen gel is read 24 hours after the start of the test and recorded in whole milliliters.

Particle Size Method

Particle size and particle size distribution can be determined by sieving. A suitable sieve apparatus is a Hosokawa Micron Air Jet Sieve (sold by Hosokawa Micron Powder Systems, Summit, NJ) with the following U.S. Standard Sieves: 18 mesh (1000 μm); 20 mesh (850 μm); 25 mesh (710 μm); 30 mesh (600 μm); 40 mesh (425 μm); 60 mesh (250 μm); 70 mesh (212 μm); 80 mesh (180 μm); 100 mesh (150 μm); 140 mesh (106 μm); and 200 mesh (75 μm).

A Pullman-Holt HEPA Vacuum, Model 86 (sold by Pullman Ermator Inc., Tampa, FL) is set on Jet Sieve to 7.2 inches (18,288 cm) water by running with the 80 mesh (180μm) sieve and the cover installed. The vacuum is adjusted using the ball valve on the vacuum take-off as a coarse adjustment and the flapper valve as a fine adjustment. The vacuum level is increased by closing the off inlet and decreased by opening the flap over the inlet.

A standard Ro-Tap® fines pan is used and the 200 mesh (75 μm) sieve with gasket is installed. The pan and sieve is tared to zero. 10.0 ± 0.2g of ground psyllium husk is weighed onto the 200 mesh (75μm) screen. The value is recorded. The sieve is placed on Jet Sieve and the blue gasket on the sieve is checked to assure mating with the black gasket of the Jet Sieve housing. The clear plastic sieve lid is installed and checked for a firm fit. The run time is set to 120 seconds and the Jet Sieve is started. The vacuum readings are monitored to assure the vacuum is steady at 7 ± 0.4 inches (17,78 ± 1.016 cm) of water.

While Jet Sieve runs, any psyllium from the fines pan that may have passed through the screen during weighing or transport is brushed. After time has expired, the sieve is removed from the Air Jet unit and is placed onto the "cleaned" fines pan. The mass of the pan and the retained psyllium is read and the value is recorded. The difference in mass from start to retained is considered to be what would have been accumulated in the pan in vibratory sieving.

The 200 mesh (75μm) sieve is removed and a 140 mesh (106μm) screen is installed onto fines pan. The pan and screen is zeroed. The retained psyllium from the 200 mesh (75μm) screen is transferred onto the 140 mesh (106μm) screen. The mass and work to transfer the mass is recorded to ±0.03 g of the retained mass recorded in the previous measure. The measurement is recorded. The procedure above is repeated with each successive screen with increasing orifice openings in the following order: 100, 80, 70, 60, 40, 30, 25, 20, and 18. After all screens are measured for particle retains the sample is finished.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

Values disclosed herein as ends of ranges are not to be understood as being strictly limited to the exact numerical values recited. Instead, unless otherwise specified, each numerical range is intended to mean both the recited values and any integers within the range. For example a range disclosed as "1 to 10" is intended to mean "1, 2, 3, 4, 5, 6, 7, 8, 9, and 10."

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

**Claims**

**1.** A method of disinfesting psyllium comprising: introducing psyllium to a radiation chamber; applying a high-frequency alternating electric field to the psyllium for a residence time of greater than 1.5 minutes to 6 minutes; dielectrically heating the psyllium to a target temperature of from 66°C to 77°C to form treated psyllium, wherein the high-frequency alternating electric field is configured at a power of from from 600 kJ/kg to 900 kJ/kg, and wherein the high-frequency alternating electric field is configured at a frequency from 13 MHz to 1,000 MHz.

2. The method according to claim 1, further comprising removing the psyllium husk from the psyllium seed and applying the high-frequency alternating electric field to the psyllium husk.

3. The method according to any one of the preceding claims, further comprising steam sanitizing the treated psyllium.

4. The method according to any one of the preceding claims, further comprising cooling the treated psyllium to 20°C to 48°C; preferably to 25°C to 45°C; and more preferably to 30°C to 40°C.

5. The method according to any one of the preceding claims, further comprising storing the treated psyllium at a temperature of 30°C or less.

6. The method according to any one of the preceding claims, wherein the swell volume of the treated psyllium is within 80% of the swell volume of untreated psyllium.

7. The method according to any one of the preceding claims, wherein the treated psyllium is formed at a throughput of 50 kg/hour to 2500 kg/hour; preferably 100 kg/hour to 2000 kg/hour; and more preferably 250 kg/hour to 1500 kg/hour.

8. The method according to any one of the preceding claims, wherein the radiation chamber comprises a first electrode and a second electrode; wherein the first electrode is positioned above a bed of psyllium and the second electrode is positioned below the bed of psyllium; wherein distance from the surface of the bed of psyllium and the first electrode comprises an air gap; wherein the air gap comprises a height of from 7.62 cm to 15.24 cm.

9. The method according to any one of the preceding claims, wherein the first electrode and the second electrode are configured at a voltage of from 6 kV to 25 kV; preferably 8 kV to 20 kV; and more preferably 10 kV to 15 kV.

10. The method according to any one of the preceding claims, further comprising introducing a continuous air flow source into the radiation chamber.

11. The method according to claim 10, wherein the continuous air flow source introduces air at a temperature of 60°C to 82.2°C; preferably 71.1°C to 76.7°C.

**Patentansprüche**

1. Verfahren zur Befreiung von Psyllium von Schädlingsbefall, umfassend:
Einleiten von Psyllium in eine Bestrahlungskammer; Anlegen eines hochfrequenten elektrischen Wechselfeldes an das Psyllium für eine Verweilzeit von mehr als 1,5 Minuten bis 6 Minuten; dielektrisches Erwärmen des Psylliums auf eine Zieltemperatur von 66 °C bis 77 °C, um behandeltes Psyllium zu bilden, wobei das hochfrequente elektrische Wechselfeld bei einer Leistung von 600 kJ/kg bis 900 kJ/kg konfiguriert ist, und wobei das hochfrequente elektrische Wechselfeld bei einer Frequenz von 13 MHz bis 1000 MHz konfiguriert ist.

2. Verfahren nach Anspruch 1, ferner umfassend das Entfernen der Psylliumschale von dem Psylliumsamen und das Anlegen des hochfrequenten elektrischen Wechselfeldes an die Psylliumschale.

3. Verfahren nach einem der vorstehenden Ansprüche, ferner umfassend das Dampfdesinfizieren des behandelten Psylliums.

4. Verfahren nach einem der vorstehenden Ansprüche, ferner umfassend das Abkühlen des behandelten Psylliums auf 20 °C bis 48 °C; vorzugsweise auf 25 °C bis 45 °C; und mehr bevorzugt auf 30 °C bis 40 °C.

5. Verfahren nach einem der vorstehenden Ansprüche, ferner umfassend das Lagern des behandelten Psylliums bei einer Temperatur von 30 °C oder weniger.

**6.** Verfahren nach einem der vorstehenden Ansprüche, wobei das Quellvolumen des behandelten Psylliums innerhalb 80 % des Quellvolumens von unbehandeltem Psyllium liegt.

**7.** Verfahren nach einem der vorstehenden Ansprüche, wobei das behandelte Psyllium bei einem Durchsatz von 50 kg/Stunde bis 2500 kg/Stunde gebildet wird; vorzugsweise von 100 kg/Stunde bis 2000 kg/Stunde; und mehr bevorzugt von 250 kg/Stunde bis 1500 kg/Stunde.

**8.** Verfahren nach einem der vorstehenden Ansprüche, wobei die Bestrahlungskammer eine erste Elektrode und eine zweite Elektrode umfasst; wobei die erste Elektrode über einem Psylliumbett angeordnet ist und die zweite Elektrode unter dem Psylliumbett angeordnet ist; wobei der Abstand von der Oberfläche des Psylliumbetts und der ersten Elektrode einen Luftspalt umfasst, wobei der Luftspalt eine Höhe von 7,62 cm bis 15,24 cm umfasst.

**9.** Verfahren nach einem der vorstehenden Ansprüche, wobei die erste Elektrode und die zweite Elektrode bei einer Spannung von 6 kV bis 25 kV konfiguriert sind; vorzugsweise von 8 kV bis 20 kV; und mehr bevorzugt von 10 kV bis 15 kV.

**10.** Verfahren nach einem der vorstehenden Ansprüche, ferner umfassend das Einleiten einer kontinuierlichen Luftstromquelle in die Bestrahlungskammer.

**11.** Verfahren nach Anspruch 10, wobei die kontinuierliche Luftstromquelle Luft bei einer Temperatur von 60 °C bis 82,2 °C einleitet; vorzugsweise von 71,1 °C bis 76,7 °C.

**Revendications**

**1.** Procédé de désinfestation de psyllium comprenant : l'introduction de psyllium dans une chambre de rayonnement ; l'application d'un champ électrique alternatif haute fréquence au psyllium pendant un temps de séjour supérieur à 1,5 minute à 6 minutes ; le chauffage diélectrique du psyllium à une température cible allant de 66 °C à 77 °C pour former du psyllium traité, dans lequel le champ électrique alternatif haute fréquence est configuré à une puissance allant de 600 kJ/kg à 900 kJ/kg, et dans lequel le champ électrique alternatif haute fréquence est configuré à une fréquence allant de 13 MHz à 1000 MHz.

**2.** Procédé selon la revendication 1, comprenant en outre le retrait de l'enveloppe de psyllium de la graine de psyllium et l'application du champ électrique alternatif haute fréquence à l'enveloppe de psyllium.

**3.** Procédé selon l'une quelconque des revendications précédentes, comprenant en outre l'assainissement à la vapeur du psyllium traité.

**4.** Procédé selon l'une quelconque des revendications précédentes, comprenant en outre le refroidissement du psyllium traité jusqu'à 20 °C à 48 °C ; de préférence jusqu'à 25 °C à 45 °C ; et plus préférablement jusqu'à 30 °C à 40 °C.

**5.** Procédé selon l'une quelconque des revendications précédentes, comprenant en outre le stockage du psyllium traité à une température de 30 °C ou moins.

**6.** Procédé selon l'une quelconque des revendications précédentes, dans lequel le volume de gonflement du psyllium traité se situe dans les 80 % du volume de gonflement du psyllium non traité.

**7.** Procédé selon l'une quelconque des revendications précédentes, dans lequel le psyllium traité est formé à un débit de 50 kg/heure à 2500 kg/heure ; de préférence 100 kg/heure à 2000 kg/heure ; et plus préférablement 250 kg/heure à 1500 kg/heure.

**8.** Procédé selon l'une quelconque des revendications précédentes, dans lequel la chambre de rayonnement comprend une première électrode et une deuxième électrode ; dans lequel la première électrode est positionnée au-dessus d'un lit de psyllium et la deuxième électrode est positionnée en dessous du lit de psyllium ; dans lequel la distance depuis la surface du lit de psyllium et la première électrode comprend un espace d'air dans lequel l'espace d'air comprend une hauteur allant de 7,62 cm à 15,24 cm.

**9.** Procédé selon l'une quelconque des revendications précédentes, dans lequel la première électrode et la deuxième électrode sont configurées à une tension allant de 6 kV à 25 kV ; de préférence 8 kV à 20 kV ; et plus préférablement 10 kV à 15 kV.

10. Procédé selon l'une quelconque des revendications précédentes, comprenant en outre l'introduction d'une source de flux d'air continu dans la chambre de rayonnement.

11. Procédé selon la revendication 10, dans lequel la source de flux d'air continu introduit de l'air à une température de 60 °C à 82,2 °C ; de préférence 71,1 °C à 76,7 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103416383 B
- WO 2016044948 A1